# EUROPÄISCHE PATENTSCHRIFT

(11) **EP 4 058 222 B1**
(45) Veröffentlichungstag und Bekanntmachung des Hinweises auf die Patenterteilung: **30.08.2023**
(21) Anmeldenummer: 20808070.5
(22) Anmeldetag: 16.11.2020
(51) Int. Cl.: B22C 9/12

(54) **MIKROWELLEN-SANDFORMKASTEN**
MICROWAVE SAND MOULDING BOX
BOÎTE DE MOULAGE EN SABLE À MICRO-ONDES

(30) Priorität: 17.11.2019 DE 102019131004; 04.02.2020 DE 102020102784
(43) Veröffentlichungstag der Anmeldung: 21.09.2022
(73) Patentinhaber: Fricke und Mallah Microwave Technology GmbH, 31226 Peine (DE)
(72) Erfinder: MALLAH, Marcel, 31226 Peine (DE)
(74) Vertreter: Benedum, Ulrich Max
(86) Internationale Anmeldenummer: PCT/EP2020/082209
(87) Internationale Veröffentlichungsnummer: WO 2021/094603

(56) Entgegenhaltungen:
- EP-A1- 0 028 267
- EP-A1- 0 554 559
- DE-B- 1 262 516
- DE-T5-112016 006 377

## Beschreibung

### GEBIET DER ERFINDUNG

Die Erfindung betrifft Verfahren und Vorrichtungen zur Herstellung von Gießereiformen, insbesondere von Sandformen und -kerne, sowie deren Trocknung mittels Mikrowelle und optional unter Vakuum.

### TECHNISCHER HINTERGRUND

Gießereiformen für Metallschmelzen bestehen in der Regel aus mehreren kooperierenden Formteilen, welche die innere und äußere Form des zukünftigen Gussteils bestimmen. Zu den Formteilen gehören auch die sogenannten Kerne zum Ausbilden von Hohlräumen im Inneren der Gießereiteile sowie Deck-, Gleit- und Mantelelemente zum Ausbilden und Formen der jeweiligen Außenseiten. Die Formteile werden für den Metallguss hergestellt durch Mischen eines feuerfesten Pulvermaterials wie Sand mit einem Bindemittel und Einbringen oder Einblasen des Bindemittel-Pulvermaterialgemisches in eine Musterform. Es folgt ein Fixieren und Aushärten des Formteils. Als Bindemittel werden verwendet synthetische Harze oder auch anorganische Bindemittel wie Wasserglas. Sie geben das Verfahren zum Trocknen, Fixieren und Härten des Formteils vor, wobei man prinzipiell zwischen "hot-box"- und "cold-box"-Verfahren unterscheidet (siehe WO 2019/137871; DE102014118577 A1; WO 2012/175072 A1; WO 2011/087564 A1; EP 0 028 267 A1; DE-A 1 262 516).

Die Großserienproduktion von Gießereiteilen, wie sie beispielsweise in Verbrennungskraftmotoren zum Einsatz kommen, beinhaltet in der Regel einen Metallgießvorgang unter Verwendung von verlorenen Gießereiformen aus vorgefertigten Sandformen und -kernen. Die Gießereiform wird mit Schmelzgut gefüllt, abgekühlt, die Form und der Kern zerkleinert und entfernt und das erhaltene Gussteil weiterverarbeitet (siehe DE 197 138 61 C2). Der Trend geht aber weg von der uniformen Großserie und hin zur rechnergesteuerten Serieneinzelfertigung. Dies spart Lagerkosten und man kann auf Schwankungen der Nachfrage besser reagieren. Für den Metallguss werden daher individuelle im 3D-Verfahren gedruckte Gießereiformen und -kerne benötigt.

Die im 3D-Verfahren gedruckten Gießereiformen und -kerne für den Metallguss sind aus Sand oder einem Pulver als Füllmaterial. Gips wird bevorzugt verwendet für den Kunststoffguss, und Sand, Keramikpulver, Glas oder andere Feuerfestteilchen hingegen für den Metallguss. Der 3D-Drucker hat ein oder mehrere Druckköpfe, die wie ein Tintenstrahl-Drucker arbeiten, nur wird nicht Tinte, sondern flüssiger Klebstoff bzw. ein Bindemittel auf eine vorige Materiallage aufgetragen. Als Datengrundlage dienen die 2D-Schnitte eines zerlegten 3D-Modells. Das heißt, die erste unterste Lage wird mit flüssigem Klebstoff auf eine ebene feste Basis aus Sand oder Pulver aufgetragen, und darauf dann die weiteren Lagen. Der 3D-Drucker zeichnet also regelmäßig ein 2D-Klebstoffbild für neues Füllmaterial. Dieses kann mittels einer Rakel aufgetragen werden, welche eine frische dünne Sand- oder Pulverlage auf das vorige Bild zieht, oder man auch einfach feine Sand- oder Pulverteilchen aufblasen. Dieser Vorgang wird wiederholt und so eine Summe einzelner Lagen auf das Bett aufgetragen. Damit das 3D-Objekt von unten nach oben wachsen kann, wird das Bett beim 3D-Druck mit jeder Lage um die Höhe einer Lage nach unten (z-Achse) abgesenkt bzw. die Druckköpfe entsprechend hochgefahren. Die Materialmengen sind so berechnet, dass sich die Lagen auch untereinander verkleben.

Ein großer Vorteil des additiven Druckverfahrens ist die Möglichkeit, einfache überhängende Strukturen erstellen zu können, denn man während des 3D-Drucks nicht-verklebte Feinteilchen als Platzhalter für spätere Hohlräume oder als Stütze für Überhänge vorsehen. Die nicht-verklebten Fernteilchen können später mittels Druckluft entfernt werden. Nach Sieben kann man sie wieder zum Drucken verwenden, so dass dies auch ressourcenschonend ist. In vielen Fällen ist noch eine Nachbearbeitung der Gießereiformen- und -kerne notwendig, beispielsweise durch Tauchen in eine flüssige Lösung (Infiltration) zwecks Verfestigung und sonstiger Vervollständigung. Für bessere Oberflächen können auch Schlichten vernebelt und als Aerosol auf die Gießereiform aufgebracht werden. Die Auflösung hängt im Wesentlichen von der Feinheit des Füllstoffs ab.

Problematisch ist, dass in den gattungsgemäßen 3D-Druck-Vorrichtungen Schichten und Lagen zwar in kurzer Zeit auftragen werden können, dass aber das Fixieren, Trocknen bzw. Härten oft sehr viel länger dauert. Man kann bei organischen Bindemitteln Härter zusetzen, um die Aushärtezeit zu verkürzen, dies ist aber mit anderen Problemen verbunden und ein zu rasches, unkontrolliertes Aushärten kann sehr nachteilig sein. Das Aushärten kann chemisch erfolgen ("cold-box-Verfahren") oder durch Erwärmen ("hot-box-Verfahren"). Eine Behandlung der nicht gehärteten, grünen Gießereiform durch Mikrowelle ist hier eine Alternative, die aber bei größeren Gießereiformen und -kernen nicht - oder nur schwer homogen umgesetzt werden kann.

Die WO 86/00033 beschreibt ein Verfahren, wobei über enge Einfüllöffnungen ein Gemisch von Sand und Wasserglas in einen Sandformkasten eingeblasen und mittels Mikrowelle ausgehärtet wird. Dieses Verfahren und der Kasten eignen sich nur für einfache kleine Gießereiformen, nicht aber von großen durch 3D-Druck hergestellte Gießereiformen und -kerne. DE 2940404 A1 offenbart ein Verfahren zum Trocknen feuchter Grünsandformen und darauf aufgebrachter Schlichten durch Mikrowelle. Die Grünsandform wird einem Unterdruck ausgesetzt, so dass beim Trocknen entstehende Gase und Dämpfe nicht zu unerwünschten Hohlräume führen. Die Vorrichtung für die Mikrowellentrocknung der Grünsandformen hat eine bodenseitige Reflektorplatte, auf der die Formen und -kerne liegen, einen haubenförmigen Reflektorschirm und Einrichtungen für die Erzeugung von Unterdruck im Mikrowellenraum. Die Schlichten für eine bessere Oberflächengüte des Gussteils werden mit Alkohol oder Wasser versetzt auf die Sandkernform aufgebracht, was aber das Trocknen und Aushärten weiter erschwert.

Das Trocknen und Härten großer Gießereiformen und -kerne während des 3D-Drucks durch Mikrowelle ist in der Praxis problematisch, denn die bekannten Formkästen und Mikrowellenkammern weisen technisch bedingt ein mehr oder weniger chaotisch wirkendes Mikrowellenfeld auf (siehe DE 3 119 979 A1; DE 11 2016 006 377 T5, WO 2017/152348; EP 0 554 559 A1). In den Formkästen und Kammern kommt es unvermeidlich zu Mehrfachreflexionen und Überlagerungen der Mikrowellen und die Intensität des Mikrowellenfeldes am jeweiligen Ort hängt zudem ab von der Position, Höhe und Größe der zuletzt aufgetragenen Lage von Füllmaterial. Der Grünling in der Kammer absorbiert die Mikrowellen mit jeder Lage jeweils anders und abhängig von seiner Position und Größe. Praktisch hat man unbekannte Feldintensitäten, weshalb in konventionellen Mikrowellenkammern als Ausgleich die Objekte bewegt oder herumgefahren werden müssen. Ein gezieltes Härten von einzelnen im 3-Druck aufgetragenen Lagen ist so kaum möglich, denn auch die Lagen reagieren auf jede Bewegung. Der Stand der Technik repräsentiert das Problem.

### KURZE BESCHREIBUNG DER ERFINDUNG

Dieses Problem wird gelöst durch eine Vorrichtung zum Trocknen und Fixieren von Gießereiformen, umfassend eine Kammer mit Wänden, wobei in den Wänden Mikrowelleneinrichtungen und optional Einrichtungen für die Erzeugung eines Unterdrucks in der Kammer vorhanden sind. Sie zeichnet sich dadurch aus, dass
die Kammer (10) im Wesentlichen raumgleich mit dem Formkasten (10, 210) für die Gießereiform (20, 220) ist, welche im Formkasten (10, 210) mit einem Gemisch von teilchenförmigen Füllmaterial und Bindemittel im 3D-Verfahren aufgebaut wird;
in der Deckenplatte (30) und optional in den Wänden (30) der Kammer (10) Einrichtungen für Mikrowellen (100, 200) vorhanden sind, welche Mikrowellen direkt in der Formkasten (10, 210) und auf die im 3D-Verfahren gedruckte Gießereiform (20, 220) abstrahlen;
die Wände (30) der Kammer (10) für Mikrowellen undurchlässig sind; die Deckenplatte (30) den Formkasten (10, 210) mithilfe einer umlaufenden Hochfrequenz(HF)-Dichtung (35), die mit den Seitenwänden (30) der Kammer (10) kooperiert, für hochfrequente Mikrowellen abgedichtet ist;
der Formkasten (10, 210) mit der Gießereiform (20, 220) zur Deckenplatte (30) mit der Mikrowelleneinrichtung (100) verschieblich ist und umgekehrt, die Deckenplatte (30) mit der Mikrowelleneinrichtung (100) zum Formkasten (10, 210) mit der Gießereiform (20, 220) verschieblich ist.

In einer Ausführungsform ist der Formkasten (10, 210) mit der Gießereiform (20, 220) bzw. den Kern zur Deckenplatte (30) parallel verschieblich. Der Formkasten (10, 210) kann beispielsweise auf Rollen gelagert sein.

In einer Ausführungsform ist die Hochfrequenz(HF)-Dichtung der Deckenplatte (30) in einer Trapeznut (35) aufgenommen. Die HF-Dichtung (35) ist so dimensioniert, dass sie die Seitenwände (30) des Formkastens (10, 210) umgibt. Dadurch können auch zwei oder mehrere Formkästen (10, 210) mit einer Deckenplatte (30) mit Mikrowellenstrahlern (100, 200) wechselweise kooperieren. Das 3D-Drucken und die Mikrowellenbehandlung können daher an getrennten Stationen erfolgen. Die Deckenplatte (30) kann in einer bevorzugten Ausführungsform von einer Mikrowellenfalle umgeben sein, eine berührungsfreie Mikrowellendichtung (35) zum Formkasten (10, 210).

In einer bevorzugten Ausführungsform kann der Formkasten (10, 210) bzw. die Station Einrichtungen aufweisen für ein Befeuchten und Oberflächenglätten der im 3D-Verfahren generierten Sandform. In einer besonders bevorzugten Ausführungsform sind auch Einrichtungen (40) vorhanden für ein Absaugen von Dämpfen, Gasen und/oder zur Herstellung eines Unterdrucks im Formkasten (10, 210).

In einigen Ausführungsformen ist die Mikrowelleneinrichtung (100) in der Deckenplatte (30) über Hohlleiter mit ein oder mehreren Magnetronen gekoppelt ist. Es kann als Mikrowellenkopplungssystem ausgeführt sein, wobei die vom Grünling absorbierte Mikrowellenleistung mittels Sensoren bestimmt wird. In einer Ausführungsform sind in der Deckenplatte (30) ein oder mehrere Mikrowellen-Drehstrahler aufgenommen.

Ein weiterer Aspekt der Erfindung betrifft ein Verfahren zum Trocknen und Härten von Gießereiformen (20, 220) und -kernen für den Metallguss. Dieses ist gekennzeichnet durch die Schritte: (i) Generieren einer Gießereiform (20, 220) in einem Formkasten (10, 210) mithilfe von additiven Füllmaterialschichten im 3D-Druckverfahren; (ii) Behandeln der grünen Gießereiform (20, 220) direkt mit Mikrowelle, indem auf den Formkasten (10, 210) berührungslos eine Deckenplatte (30) mit Mikrowelleneinrichtung (100, 200) angeordnet wird welche eine um den Formkasten (10, 210) umlaufende Hochfrequenzdichtung (35) und/oder eine umlaufende berührungsfreie Mikrowellenfalle aufweist, sodass der Formkasten (10) zu einer Kammer für Mikrowellen wird. Die Deckenplatte (30) kooperiert mit dem mikrowellenundurchlässigen Formkasten (10, 210), welcher die Mikrowellenkammer (10) bildet.

Indem Formkasten (10, 210) und Mikrowellenkammer (10) den mikrowellentechnisch gleichen Raum einnehmen bzw. mikrowellenmäßig raumgleich sind, liegt ein berechenbarer Mikrowellenraum mit bekannten Eigenschaften vor. Raumgleichheit zwischen Kammer und Formkasten beschreibt eine mikrowellentechnische Raumgleichheit, dass also die Ständer und Wände des Formkasten (10, 210) mikrowellentransparent sind und sich somit in der Mikrowellenkammer neutral verhalten. Der Formkasten (10, 210) darf das Mikrowellenbild in der Kammer nicht verändern. Praktisch bedeutet dies, dass der Formkasten (10, 210) mit der Gießereiform (20, 220) nicht viel kleiner sein darf als die Kammer (10) selbst. Als Faustregel gilt, dass die Abstände zwischen den Wänden des Formkastens (10, 210) und der Mikrowellenkammer (10) nicht mehr als ein Viertel Mikrowellenlänge, bevorzugt nicht mehr als eine Zehntel Wellenlänge (915 MHz, 2,45 GHz) betragen. Man erhält so, dass die Deckenplatte (30) mit den Mikrowelleneinrichtungen ein bekanntes gerichtetes Mikrowellenfeld auf die Gießereiform (20, 220) abstrahlt und dieses so von oben härtet. Man begegnet damit der Gefahr von sich auslöschenden Reflexionen und Mikrowellen-Überlagerungen. Die 3D-gedruckte Gießereiform (20, 220) und die aufgetragenen Lagen von Binder und Füllmaterial kann man damit gezielt härten, im Ganzen oder etappenweise für einzelne Lagen oder Gruppen von Lagen. So können auch große individuelle Gießereiformen und -kerne im 3D-Druck rasch hergestellt werden, ohne dass sie in Komponenten oder Blockgruppen unterteilen muss.

Die Erfindung wird nunmehr mit Bezug auf die anliegenden Zeichnungen, den Beispielen für bevorzugte Ausführungsformen und den Ansprüchen beschrieben. Die Beispiele, Ausführungsformen, Zeichnungen und Ansprüche dienen der Offenbarung des Erfindungsgedankens. Der beanspruchte Schutzbereich ergibt sich aus dem Anspruchssatz.

### BESCHREIBUNG DER ABBILDUNGEN

Es zeigt:
- Fig. 1: eine schematische Zeichnung der Mikrowellenkammer bzw. des Formkastens mit der im 3-D Verfahren gedruckten Sandkernform (20), wobei die Mikrowelleneinkopplung in dem Formkasten (der hot-Box) direkt von oben erfolgt;
- Fig.1A: eine Detailansicht aus Figur 1 vom Übergang zwischen der metallischen Deckenplatte (30) und dem Gießereiform-Kasten (50) bzw. optional der baugleichen Fallenkammer für den Metallguss;

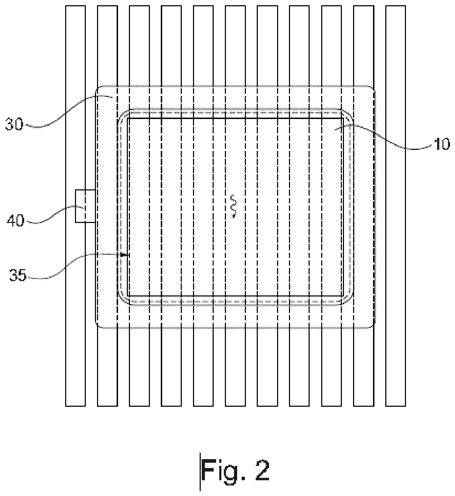

- Fig. 2: Prinzipzeichnung der umlaufenden Hochfrequenzdichtung bzw. der Mikrowellenfalle zwischen der metallenen Deckenplatte mit der Mikrowelleneinkopplung (915 MHz und/oder 2,45 GHz) und dem darunterliegenden Kasten - zueinander horizontal verschieblich angeordnet. Der Kasten ist im Wesentlichen raumgleich mit dem Formkasten für die Gießereiform bzw. der Sandform (nicht zu sehen).

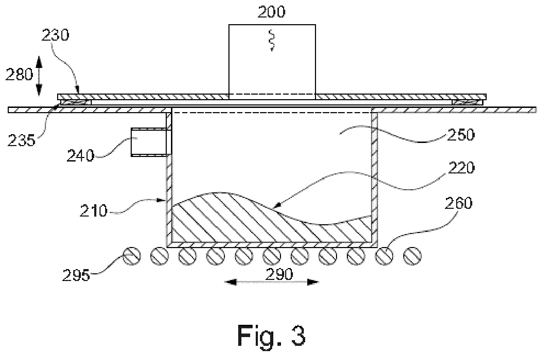

- Fig. 3: eine Seitenansicht einer bevorzugten Ausführungsform der Mikrowellenkammer beziehungsweise dem Formkasten mit der im 3D-Verfahren gedruckten Sandform, ausgerüstet mit einer Mikrowellenfalle (235), wobei der Kasten zur Deckenplatte mit der Mikrowelleneinkopplung berührungslos angeordnet und verschiebbar ist;
- Fig. 4: eine Draufsicht auf die Deckenplatte (10) mit dem auf Rollen (90) verschieblichen Formkasten, der zugleich auch der Fallenkasten für den Metallguss sein kann.

### EINGEHENDE BESCHREIBUNG DER ERFINDUNG

Im Stand der Technik beim hot-box-Verfahren die zu erhitzende Grünsandform in der Box, dem Formkasten in einen Mikrowellenraum gestellt und behandelt. Der Formkasten, die Box muss hierzu aus einem für Mikrowellen transparenten Material sein. Eine solche Mikrowellenbestrahlung führt aber wegen der Dimensionen zu einem chaotischen Mikrowellenfeld, denn Reflexionen und Überschneidungen sind in der DE 31 19 979 A1 unvermeidlich. Die Mikrowellen werden von den Wänden des Ofenraums und auch von diversen Strukturelementen der Sandformbox reflektiert. Dies gilt auch für die Anordnung gemäß DE 29 40 404 A1, denn Reflexionsplatten und Mikrowellen reflektierende Hauben verschlimmern das Problem. Dadurch sind die Feldintensitäten in einem solchen Ofenraum inhomogen und zudem abhängig von der Absorption durch die Grünsandform.

Erfindungsgemäß wird der rechteckige bzw. einfach dimensionierte Formkasten mit der im 3-D Verfahren gedruckten Grünsandform nicht von außen mit Mikrowellen bestrahlt, sondern die Mikrowellen werden direkt über Strahler (100) in der Deckenplatte des Formkastens auf die Grünsandform (20) gestrahlt. Es können mehrere bzw. eine Anordnung von Mikrowelleneinrichtungen und -strahlern mit 915 MHz und/oder 2,45 GHz in der Deckenplatte des Kastens vorgesehen sein. Ziel ist ein homogenes, von der Kastendecke zum Kastenboden gerichtetes Mikrowellenfeld und der Ausschluss von Reflexionen und Auslöschungen. Je kleiner der Raum, desto geringer die Gefahr des Kontrollverlusts. Zudem ist der Formkasten zur Deckenplatte (30) mit den Mikrowellenstrahlern seitlich horizontal, parallel zur Deckenplatte (30) verschiebbar. Der Formkasten (10) kann mit dem späteren Fallenkasten für den Metallguss identisch sein, und manche Formen können erhebliches Gewicht haben, mehrere Tonnen schwer sein. Es ist daher günstig, wenn 3D-Druck der Sandkernform und Fixieren und Härten mittels Mikrowellen entkoppelt sind, an verschiedenen getrennten Stationen erfolgen. Der Boden des Formkastens mit der Sandkernform kann in manchen Ausführungsformen vertikal beweglich sein, also angehoben bzw. gesenkt werden. In einer Ausführungsform ist die zu fixierende Sandkernform (20) nicht nur seitlich mit dem metallischen Formkasten (30) bewegbar, sondern auch vertikal im Formkasten. Die Seitenbewegen kann durch Rollen unterstützt werden; die Hubbewegung kann über einen Hydraulikmechanismus erfolgen.

Die Deckenplatte (30) ist berührungslos, aber für Mikrowellen dicht mit dem Formkasten verbunden. Zwischen Deckenplatte (30) und Formkasten kann eine umlaufenden HF-Dichtung in einer Trapeznut angeordnet sein, zudem auch eine weitere umlaufende Mikrowellenfalle. Die umlaufende HF-Dichtung in der Trapez-Nut kooperiert funktional zu den metallischen Seitenwänden des Formkastens. Die Mikrowellenstrahler können in einigen Ausführungsformen über Hohlleiter mit Magnetronen gekoppelt sein. Sind die Magnetron von den Strahlern entfernt angeordnet sein, können sie gegebenenfalls mit Wasserkühlung betrieben werden. Bevorzugt sind auch MW-Drehstrahler in der Deckenplatte. Die Mikrowellenantennen können in einigen Ausführungsformen als Schlitz- oder Lochantennen ausgebildet sein, so dass ein homogenes MW-Feld im Formkasten erhalten wird. Die Mikrowellenbehandlung kann mit 915 MHz oder 2,45 GHz oder mit beiden Frequenzen erfolgen. Durch eine Kombination beider Frequenzen 915 MHz (größere Eindringtiefe) und 2,45 GHz (höhere Feldhomogenität) kann eine gezieltere und gleichmäßigere Härtung der grünen Sandform erfolgen.

Der Form- oder Fallenkasten mit der Sandform ist zu der mit Mikrowellenstrahlern bestückten Deckenplatte relativ verschieblich. In einer bevorzugten Ausführungsform sind Fallenkasten und Mikrowellen-Deckplatte berührungslos zueinander angeordnet und durch einen freien Spalt getrennt. Der Spalt zwischen Fallenkasten und Mikrowellen-Deckplatte ist dann bevorzugt mit einer Mikrowellenfalle ausgerüstet, so dass keine Mikrowellen in die Umgebung austreten können. Bei Mikrowellenbetrieb kann so ein beispielsweise rollengelagerter Fallenkasten hin- und herbewegt werden, so dass eventuelle Inhomogenitäten des MW-Feldes keine ungleichmäßige Härtung der Sandform bewirken. In einigen Ausführungsformen kann auch der Boden mit dem Sanddruck hoch oder tief bewegt werden. Dies ist besonders bei großen Sandformen vorteilhaft, da die Eindringtiefe der Mikrowelle in die Sandform auf wenige Zentimeter beschränkt ist. Der Druck der Sandform erfolgt dann bevorzugt so, dass zunächst einige Zentimeter Sand mit Bindemittel im 3D-Verfahren als Grünling gedruckt werden, dann der Kasten mit dem Grünling unter die Deckplatte mit den Mikrowellenstrahlern bewegt und der Grünling mittels Mikrowelle gehärtet wird, dann auf die gehärtete Sandform weitere grüne Sandschichten im 3D-Verfahren aufgedruckt werden, dann der Gründruck gehärtet wird, und so weiter. Die Fixierung bzw. Härtung der Sandform kann also eine mehrfache Mikrowellenbehandlung der in mehreren Schritten im 3D-Verfahren aufgetragenen Sandschichten erfordern. So lassen sich auch große Sandformen im 3-D Druck herstellen und in der Mikrowellen-Hotbox härten. Der Fachmann erkennt, dass 3D-Sanddruck und Mikrowellenhärtung auf getrennten Stationen erfolgen können. Auch kann die Mikrowellen-Deckenplatte bewegt werden und der Formkasten mit der Sandform stationär sein. In einer besonders bevorzugten Ausführungsform ist der Formkasten mit der nach unten beweglichen Bodenplatte mit der Sandform darauf im Wesentlichen stationär anordnet, und es wird die dazu berührungslos verschiebbare Mikrowellen-Deckenplatte beim Härten hin- und herbewegt bzw. herumbewegt, gegebenenfalls im Wechsel mit einer Druckeinheit für den 3D-Sanddruck.

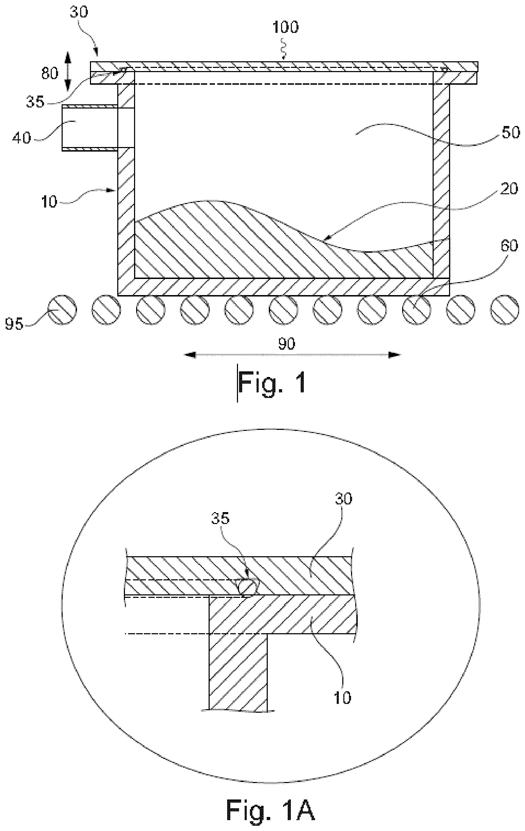

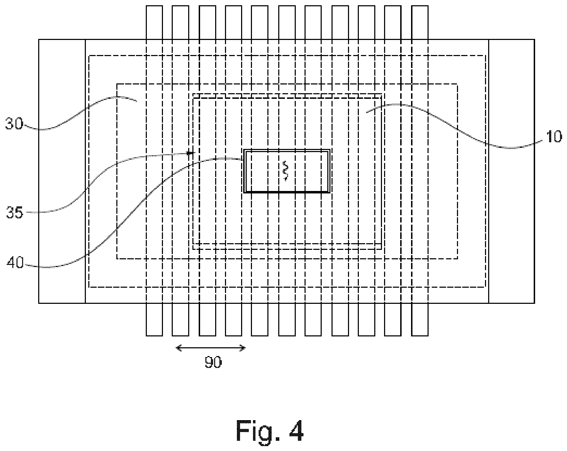

Siehe Figur 1. Sie zeigt eine Zeichnung der Vorrichtung zum Trocknen und Fixieren von Gießereiformen. Der Formkasten (10) enthält die Gießereiform (20) bzw. Sandform oder -kern, welche im Formkasten (10) aus einem Gemisch von teilchenförmigen Füllmaterial (bspw. Gips, Sand, Keramikpulver) und Bindemittel (bspw. synthetische Harze, Wasserglas) im 3D-Verfahren aufgebaut wurde. In der Deckenplatte (30) und optional in den Wänden des Formkastens (10) sind Einrichtungen (Ports, Antennen, Drehantrennen, Schlitzantennen) für Mikrowellen (100) vorhanden, bevorzugt zusammen mit Sensoren zur Bestimmung der Intensität des Wellenfeldes bzw. der Absorption durch die zu härtende Grünform. Die Antennen oder Strahler geben Mikrowellen (915 MHz, 2,45 GHz oder beide Frequenzen) ab in den Kastenraum und auf die im 3D-Verfahren gedruckte Gießereiform. Die Wände des Formkastens (10) sind für Mikrowellen undurchlässig, also in der Regel einfach aus Metall. Die Deckenplatte (30) ist über den Formkasten (10) angeordnet und beide Teile sind für Mikrowellen dicht aufgrund einer umlaufenden Hochfrequenz(HF)-Dichtung, die mit den Seitenwänden des Kastens kooperiert. Der Formkasten (10) mit der Gießereiform (20) ist zudem zur Deckenplatte (30) mit der Mikrowelleneinrichtung (100) seitlich verschieblich (parallel verschieblich), und durch eine Hin- und Herbewegung in der Größenordnung der Mikrowellenlänge kann man eine homogene Behandlung erreichen. Der Formkasten 10 für die Gießereiformen und -kerne ist also zur Deckenplatte (30) parallel verschieblich, siehe Pfeile in Figur 1, und diese Seitenbewegung kann man durch eine Lagerung auf Rollen erreichen. Der Formkasten kann auch aus einem mikrowellentransparenten Werkstoff sein, der dann in eine raumgleiche metallene bzw. mikrowellenintransparente Mikrowellenkammer platziert wird; siehe auch Fig. 4. Dies erlaubt einerseits das gleichzeitige Härten von mehreren Sandformen in einer metallenen Mikrowellenkammer und auch für manche Sandformen eine rationellere Produktion, insbesondere wenn 3D-Druck und Härten unterschiedlich lange dauern.

Damit die Vorrichtung für Mikrowellen dicht ist, befindet sich in der Deckenplatte eine Mikrowellendichtung in einer Trapeznut (35). Es sind auch andere Mikrowellendichtung möglich. Die Mikrowellendichtung ist umlaufend um den Kasten, so dass keine hochfrequente Leistung entweichen kann. Bevorzugt kooperieren zwei oder mehrere Formkästen (10) mit einer MW-Deckenplatte (30), so dass zwei oder mehrere Formkästen mit im 3D-Druck hergestellten Gießereiformen wechselweise behandelt werden können. In einigen Ausführungsformen ist daher die MW-Deckenplatte (30) neben der HF-Dichtung zur Sicherheit noch mit einer weiteren umlaufenden Mikrowellenfalle ausgerüstet.

Die Vorrichtung kann zudem Einrichtungen aufweisen für ein Befeuchten und Oberflächenglätten der im 3D-Verfahren generierten Sandformen. Weiterhin Einrichtungen zum Absaugen von Dämpfen, Gasen oder Luft vor und während der Hotbox-Behandlung. Bevorzugt sind die Einrichtungen für ein Absaugen von Dämpfen, Gasen und/oder zur Herstellung eines Unterdrucks in der Bodenplatte bzw. im unteren Bereich des Formkastens angeordnet.

Die Mikrowelleneinrichtungen (100) in der Deckenplatte können über Hohlleiter mit ein oder mehreren Magnetronen gekoppelt sein. Bei geeigneter Anordnung können die Magnetrone auch wassergekühlt sein für eine höhere Leistung. In der Deckenplatte (30) können auch ein oder mehrere Drehstrahler aufgenommen sein.

Beschrieben werden hier anhand der Vorrichtung auch Verfahren zum Trocknen und Fixieren von Gießereiformen für den Metallguss in Formkästen, wobei das System die Schritte umfasst: (i) Generieren einer Gießereiform in einem für Mikrowellen undurchlässigen Formkasten (10) mithilfe von additiven Füllmaterialschichten im 3D-Druckverfahren; (ii) Behandeln der grünen Gießereiform (20) mit Mikrowelle, indem auf den Formkasten (10) berührungslos eine Deckenplatte (30) mit Mikrowelleneinrichtung (100) angeordnet wird, welche eine um den Formkasten (10) umlaufende Hochfrequenz-Dichtung und optional eine Mikrowellenfalle aufweist.

Alternativ kann das Verfahren zum Trocknen und Fixieren von Gießereiformen für den Metallguss die Schritte umfasst: (i) Generieren einer Gießereiform in einem für Mikrowellen durchlässigen Formkasten (10) mithilfe von additiven Füllmaterialschichten im 3D-Druckverfahren; (i*) Anordnen des Formkasten mit der Gießereiform in eine raumgleiche für Mikrowellen undurchlässigen Kammer; (ii) Behandeln der grünen Gießereiform (20) mit Mikrowelle, indem auf die Kammer (10) eine Deckenplatte (30) mit Mikrowelleneinrichtung (100) angeordnet wird, welche eine um den Formkasten (10) umlaufende Hochfrequenz-Dichtung und/oder eine umlaufende Mikrowellenfalle aufweist.

Bei einer solchen Mikrowellentrocknung werden nur die feuchten bzw. die Mikrowellen absorbierenden Teile der Form und Kerne erwärmt. Die übrigen Teile und insbesondere die anorganischen Teilchen (Sand, Gips, Pulverteile) bleiben kalt. Der Energieeinsatz ist daher im Vergleich zu konventionellen Trocknungsverfahren geringer und die Trocknungszeit kürzer. Daher kann die Mikrowellenbehandlung mit dem 3D-Druck in Tandem erfolgen. Während eine grüne Sandform im ersten Kasten im 3D-Verfahren aufgebaut wird, kann zeitgleich eine zweite Sandform mittels Mikrowelle getrocknet und fixiert werden, beispielsweise in Vorbereitung eines weiteren 3D-Additivschritts. Die Formkästen kooperieren berührungslos mit der MW-Deckenplatte und sind horizontal beweglich. So kann an einer ersten Station im 3D-Verfahren eine Grünsandform hergestellt werden, an einer weiteren Station wird die Grünsandform mittels Mikrowelle getrocknet und fixiert und an einer dritten Station kann umgehend der Metallguss erfolgen. Die erste und die zweite Station können selbstverständlich zusammengelegt werden. Der Fachmann weiß, dass noch weitere Schritte erforderlich sein können, wie das Aufbringen von Schlichten und Trennschichten, usw. Dies ist ermöglicht, dass man auf einen Mikrowellenofenraum verzichtet und stattdessen, da die Formkästen bzw. Boxen zu einer MW-Deckenplatte passen und kooperieren, direkt die Sandkernform bestrahlt, härtet und für den Metallguss vorbereitet. Der Formkasten wird in diesem Schritt dann zur Falle für das Gussmetall.

### BEZUGSZEICHENLISTE

- 10: metallene Kammer (Formkasten) für eine im 3D-Verfahren gedruckte Gießereiform
- 20: Gießereiform ((Sandform, -kern, gedruckt im 3-D Verfahren)
- 30: metallene Deckenplatte mit umlaufender Hochfrequenz-Dichtung
- 35: Hochfrequenz-Dichtung in umlaufender Trapeznut
- 40: Stutzen für Absaugvorrichtung (Saugvorrichtung)
- 50: Mikrowellenraum
- 60: Rollen für verschieblichen Formkasten
- 80: Hub / vertikale Bewegung der Gießereiform, gedruckt im Multilayer-Additiv-Verfahren.
- 90: Verschub / horizontale Bewegung des Formkastens
- 100: Mikrowelleneinkopplungssytem oder/und Drehantennen mit Feldvergleichsmessung
- 200: Mikrowelleneinkopplungssystem mit Feldvergleichsmessung
- 210: Formkasten (mikrowellenintransparent oder raumgleich mit metallener Kammer)
- 220: Gießereiform
- 230: metallene Deckenplatte
- 235: Mikrowellenfalle im Spalt zwischen Deckenplatte und Formkasten
- 240: Absaugung
- 250: Mikrowellenraum
- 260: Rollen
- 280: Vertikalbewegung
- 290: Horizontalbewegung
- 295: Rollenlagerung

## Patentansprüche

1. Vorrichtung zum Trocknen und Fixieren von Gießereiformen (20), umfassend eine Kammer (10) mit Wänden (30), wobei in den Wänden (30) Mikrowelleneinrichtungen und optional Einrichtungen (40) für die Erzeugung eines Unterdrucks in der Kammer (10) vorhanden sind, **dadurch gekennzeichnet, dass**
die Kammer (10) raumgleich mit einem Formkasten (10, 210) für die Gießereiform (20, 220) ist, die im Formkasten (10, 210) mit einem Gemisch von teilchenförmigen Füllmaterial und Bindemittel im 3D-Verfahren aufgebaut wird,
in der Deckenplatte (30) und/oder in den Wänden der Kammer (10) Einrichtungen für Mikrowellen (100) vorhanden sind, welche Mikrowellen in den Kastenraum (50) und auf die im 3D-Verfahren gedruckte Gießereiform (20, 220) abstrahlen;
die Wände der Kammer (10) für Mikrowellen undurchlässig sind;
die Deckenplatte (30) berührungslos den Formkasten (10, 210) mithilfe einer umlaufenden Hochfrequenz(HF)-Dichtung (35), die mit den Seitenwänden der Kammer (10, 210) kooperiert, für hochfrequente Mikrowellen abgedichtet ist;
der Formkasten (10, 210) mit der Gießereiform (20, 220) und die Deckenplatte (30) mit der Mikrowelleneinrichtung (100, 200) zueinander verschieblich sind.

2. Vorrichtung nach Anspruch 1, wobei der Formkasten (10, 210) für die Gießereiformen (20, 220) zur Deckenplatte (30) parallel verschieblich ist.

3. Vorrichtung nach Anspruch 1 oder 2, wobei in der Deckenplatte (30) eine Mikrowellendichtung (35) in einer Trapeznut (35) aufgenommen ist, welche mit den mikrowellenintransparenten Wänden der Kammer (10, 210) kooperiert.

4. Vorrichtung nach den Ansprüchen 1 bis 3, wobei zwei oder mehrere Formkästen (10, 210) mit einer Deckenplatte (30) mit Mikrowellenstrahlern (100) wechselweise kooperieren.

5. Vorrichtung nach einem der Ansprüche 1 bis 4, wobei die Deckenplatte (30) von einer Mikrowellenfalle (35) umgeben ist.

6. Vorrichtung nach einem der Ansprüche 1 bis 5, die Einrichtungen aufweist für ein Befeuchten und Oberflächenglätten der im 3D-Verfahren generierten Sandformen (20, 220).

7. Vorrichtung nach einem der Ansprüche 1 bis 6, die Einrichtungen (40) aufweist für ein Absaugen von Dämpfen, Gasen und/oder zur Herstellung eines Unterdrucks.

8. Vorrichtung nach einem der Ansprüche 1 bis 7, wobei die Mikrowelleneinrichtung (100) in der Deckenplatte (30) über Hohlleiter mit ein oder mehreren Magnetronen gekoppelt ist.

9. Vorrichtung nach einem der Ansprüche 1 bis 7, wobei in der Deckenplatte (30) ein oder mehrere Drehstrahler für Mikrowellen aufgenommen sind.

10. Vorrichtung nach einem der Ansprüche 1 bis 8, wobei in der Deckenplatte (30) Mikrowelleneinkopplungseinrichtungen (100, 200) mit 915 MHz für hohe Eindringtiefen und Mikrowelleneinrichtungen mit 2,45 GHz für hohe Feldhomogenität vorhanden sind.

11. Verfahren zum Trocknen und Fixieren von Gießereiformen (20, 220) für den Metallguss, **gekennzeichnet durch**
Generieren einer grünen Gießereiform (20, 220) in einem für Mikrowellen undurchlässigen Formkasten (10, 210) mithilfe von additiven Füllmaterialschichten im 3D-Druckverfahren;
Behandeln der grünen Gießereiform (20, 220) mit Mikrowelle, indem auf den Formkasten (10, 210) eine Deckenplatte (30) mit Mikrowelleneinrichtung (100, 200) angeordnet wird, welche eine um den Formkasten (10, 210) umlaufende Hochfrequenz-Dichtung (35) und/oder eine umlaufende Mikrowellenfalle (35) aufweist.

12. Verfahren zum Trocknen und Fixieren von Gießereiformen (20, 220) für den Metallguss, **gekennzeichnet durch**
Generieren einer Gießereiform (20, 220) in einem für Mikrowellen durchlässigen Formkasten (10, 210)) mithilfe von additiven Füllmaterialschichten im 3D-Druckverfahren;
Platzieren des Formkastens (10, 210) in einer für Mikrowellen undurchlässigen, mit dem Formkasten raumgleichen Kammer (10, 210),
Behandeln der grünen Gießereiform (20, 220) mit Mikrowelle, indem auf die Kammer (10, 210) eine Deckenplatte (30) mit Mikrowelleneinrichtung (100, 200) angeordnet wird, welche eine um die Kammer (10, 210) umlaufende Hochfrequenz-Dichtung (35) und/oder eine Mikrowellenfalle (35) aufweist.

## Claims

1. Device for drying and fixing foundry molds, comprising a chamber with walls, in which walls (30) microwave means and optionally means (40) for generating a negative pressure in the chamber (10) are present, **characterized in that** -
the chamber is coextensive with a mold box (10, 210) for the casting mold (20, 220), which is fabricated in the mold box (10, 210) using a mixture of particulate filler material and binder in a 3D printing process;
means for microwaves (100) are arranged in the ceiling plate (30) and/or in the walls of the chamber (10), which microwave means radiate into the box space (50) and onto the 3D-printed casting mold (20, 220);
the walls of the chamber (10) are impermeable to microwaves;
the ceiling panel (30) contactless seals the mold box (10, 210) to high-frequency microwaves through a circumferential high-frequency (HF) seal (35) that cooperates with the side walls of the chamber (10, 210);
the mold box (10, 210) with the casting mold (20, 220) and the ceiling plate (30) with the microwave device (100, 200) are movable relative to each other.

2. The device according to claim 1, wherein the mold box (10, 210) for the casting molds is displaceable parallel to the ceiling plate (30).

3. The device according to claim 1 or claim 2, wherein a microwave seal (35) is accommodated in the ceiling plate (30) in a trapezoidal groove (35) which cooperates with the microwave-impermeable walls of the chamber (10, 210).

4. The device according to any one of claims 1 to 3, wherein two or more mold boxes (10, 210) alternately cooperate with a ceiling plate (30) comprising microwave radiators (100).

5. The device according to any one of claims 1 to 4, wherein the ceiling plate (30) is surrounded by a microwave trap (35).

6. The device according to any one of claims 1 to 5, comprising means for moistening and surface smoothing of the sand molds (20, 220) generated in the 3D printing process.

7. The device, according to any one of claims 1 to 6, comprising means (40) for extracting vapors, gases and/or for producing a negative pressure.

8. The device, according to any one of claims 1 to 7, wherein the microwave means (100) accommodated in the ceiling plate (30) are coupled to one or more magnetrons via waveguides.

9. The device, according to any one of claims 1 to 7, wherein the ceiling plate (30) accommodates one or more rotating microwave emitters.

10. The device, according to any one of claims 1 to 8, which has in the ceiling plate microwave means (100, 200) emitting at 915 MHz for high penetration depths and microwave means emitting at 2.45 GHz for high field homogeneity.

11. A method for drying and fixing foundry molds (20, 220) for metal casting, **characterized by**
fabricating a green casting mold (20, 220) in a microwave-impermeable mold box (10, 210) using additive filler material layers in a 3D printing process;
treating the green casting mold (20) with microwave by placing on the mold box (10, 210) a ceiling plate (30) with microwave means (100, 200) comprising a high-frequency seal (35) surrounding the mold box (10, 210) and/or a microwave trap (35) surrounding the mold box (10, 210).

12. A method for drying and fixing foundry molds for metal casting, **characterized by**
fabricating a casting mold (20, 220) in a microwave-permeable mold box (10, 210) using additive filler material layers in a 3D printing process;
placing the mold box (10, 210) in a microwave-impermeable chamber (10, 210) that is coextensive with the mold box;
treating the green casting mold (20, 220) with microwaves by placing on the chamber (10, 210) a ceiling plate (30) with microwave means (100, 200) comprising a high-frequency seal (35) surrounding the chamber (10, 210) and/or a microwave trap (35).

## Revendications

1. Dispositif pour le séchage et la fixation de moules de fonderie, comprenant une chambre avec des parois, des dispositifs à micro-ondes et éventuellement des dispositifs (40) pour la création d'une dépression dans la chambre (10) étant présents dans les parois (30), **caractérisé en ce que**
la chambre est de la même taille spatiale qu'un châssis de moulage (10, 210) pour le moule de fonderie (20, 220), qui est imprimé par le procédé 3D dans le châssis de moulage (10, 210) avec un mélange de matériau de remplissage particulaire et de liant;
dans la plaque de plafond (30) et/ou dans les parois de la chambre (10) se trouvent des dispositifs pour des micro-ondes (100) qui émettent des micro-ondes dans l'espace du caisson (50) et sur le moule de fonderie (20, 220) imprimé par le procédé 3D;
les parois de la chambre (10) sont imperméables aux micro-ondes ;
le panneau de plafond (30) rend le châssis de moulage (10, 210) étanche aux micro-ondes à haute fréquence sans contact, au moyen d'un joint d'étanchéité périphérique (35) à haute fréquence (HF) qui coopère avec les parois latérales de la chambre (10, 210) ;
le châssis de moulage (10, 210) avec le moule de fonderie (20, 220) et la plaque de plafond (30) avec le dispositif à micro-ondes (100, 200) peuvent être déplacés l'un par rapport à l'autre.

2. Dispositif selon la revendication 1, dans lequel le châssis de moulage (10, 210) pour les moules de fonderie peut être déplacés parallèlement au panneau de plafond (30).

3. Dispositif selon la revendication 1 ou 2, dans lequel le panneau de plafond (30) comprend un joint d'étanchéité aux micro-ondes (35) dans une rainure trapézoïdale (35) qui coopère avec les parois de la chambre (10, 210) qui ne sont pas perméables aux micro-ondes.

4. Dispositif selon les revendications 1 à 3, dans lequel deux ou plusieurs caissons de moulage (10, 210) comprenant un panneau de plafond (30) coopèrent en alternance avec des émetteurs de micro-ondes (100).

5. Dispositif selon l'une des revendications 1 à 4, dans lequel le panneau de plafond (30) est entourée d'un piège à micro-ondes (35).

6. Dispositif selon l'une des revendications 1 à 5, qui comporte des moyens pour humidifier et lisser la surface des moules en sable (20, 220) obtenus par le procédé 3D.

7. Dispositif selon l'une des revendications 1 à 6, qui présente des dispositifs (40) pour une aspiration de vapeurs, de gaz et/ou pour la création d'une dépression.

8. Dispositif selon l'une des revendications 1 à 7, dans lequel le dispositif micro-ondes (100) est couplé à un ou plusieurs magnétrons dans le panneau de plafond (30) par l'intermédiaire de guides d'ondes.

9. Dispositif selon l'une des revendications 1 à 7, dans lequel un ou plusieurs émetteurs rotatifs de micro-ondes sont logés dans le panneau de plafond (30).

10. Dispositif selon l'une des revendications 1 à 8, dans lequel le panneau de plafond contient des dispositifs micro-ondes (100, 200) à 915 MHz pour une profondeur de pénétration élevée et des dispositifs de micro-ondes à 2,45 GHz pour une grande homogénéité de champ.

11. Procédé de séchage et de fixation de moules de fonderie (20, 220) pour la coulée de métaux, **caractérisé en ce que**
fabrication d'un moule de fonderie vert (20, 220) dans un châssis de moule (10, 210) imperméable aux micro-ondes en utilisant des couches de matériau de remplissage additif dans un procédé d'impression 3D ;
traitement par micro-ondes du moule de fonderie vert (20) en plaçant sur le châssis de moulage (10, 210) un panneau de plafond (30) avec un dispositif à micro-ondes (100, 200), comprenant un joint d'étanchéité à micro-ondes (35) entourant le châssis de moulage (10, 210) et/ou un piège à micro-ondes (35) entourant le châssis de moulage.

12. Procédé de séchage et de fixation de moules de fonderie pour la coulée de métaux, **caractérisé en ce qu'**il consiste à
formation d'un moule de fonderie (20, 220) dans un châssis de moule (10, 210) perméable aux micro-ondes à l'aide de couches de matériau de remplissage additif par un procédé d'impression 3D ;
placer le châssis de moulage (10, 210) dans une chambre (10, 210) imperméable aux micro-ondes et de même taille spatiale que le châssis de moulage ;
traitement du moule vert (20, 220) par micro-ondes en plaçant sur la chambre (10, 210) un panneau de plafond (30) avec un dispositif à micro-ondes (100, 200), qui comprend un joint d'étanchéité à micro-ondes (35) entourant la chambre (10, 210) et/ou un piège à micro-ondes (35).
